# FASCICULE DE BREVET EUROPEEN

(11) **EP 3 550 134 B1**
(45) Date de publication et mention de la délivrance du brevet: **24.02.2021**
(21) Numéro de dépôt: 19163495.5
(22) Date de dépôt: 18.03.2019
(51) Int. Cl.: F02K 1/72, B64D 29/08

(54) **TURBORÉACTEUR COMPORTANT UNE NACELLE ÉQUIPÉE D'UN SYSTÈME INVERSEUR COMPORTANT UN CAPOT ARTICULÉ**
TURBOMASCHINE, DIE EINE MIT EINEM UMKEHRSYSTEM AUSGESTATTETE GONDEL MIT SCHARNIERDECKEL UMFASST
TURBINE ENGINE COMPRISING A NACELLE PROVIDED WITH A REVERSER SYSTEM COMPRISING A HINGED COVER

(30) Priorité: 05.04.2018 FR 1852968
(43) Date de publication de la demande: 09.10.2019
(73) Titulaire: Airbus Operations S.A.S., 31060 Toulouse (FR)
(72) Inventeur: CZAPLA, Lionel, 31700 CORNEBARRIEU (FR); PIARD, Frédéric, 31170 TOURNEFEUILLE (FR); RIDRAY, Frédéric, 32600 L'ISLE JOURDAIN (FR)
(74) Mandataire: Gicquel, Olivier Yves Gérard

(56) Documents cités:
- EP-A1- 2 562 405
- EP-A2- 3 103 995
- US-A1- 2010 024 387
- US-A1- 2013 220 435

## Description

La présente invention concerne un turboréacteur double flux qui comporte une nacelle équipée d'un système inverseur comportant des portes et un capot mobile articulé, ainsi qu'un aéronef comportant au moins un tel turboréacteur double flux.

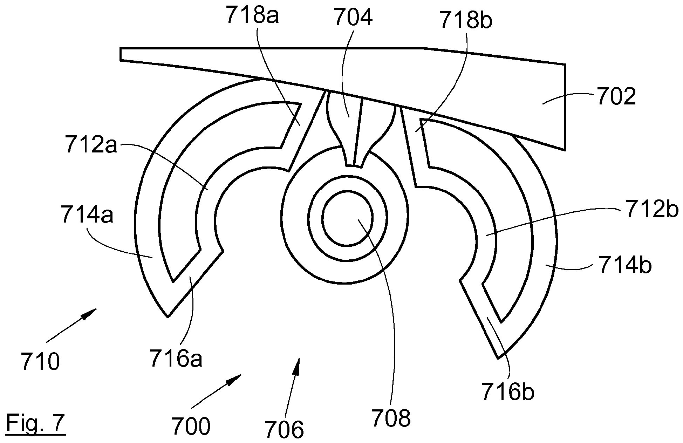

La Fig. 7 est une vue de face d'un système de propulsion 700 de l'état de la technique pour un aéronef. L'aéronef comporte un fuselage de part et d'autre duquel est fixée une aile 702. Le système de propulsion 700 comprend un mât 704, un turboréacteur double flux 706 présentant un noyau 708 constituant le moteur et une nacelle 710.

Le mât 704 est fixé sous l'aile 702 et il porte le noyau 708 et la nacelle 710.

Afin d'assurer la maintenance du turboréacteur double flux 706, la nacelle 710 présente des capots qui sont mobiles entre une position fermée dans laquelle les capots sont resserrés autour du noyau 708 et une position ouverte dans laquelle les capots sont écartés autour du noyau 708.

En particulier, la nacelle 710 présente deux capots intérieurs 712a-b (également appelés IFS pour « Internai Fixed Structure » en terminologie Anglo-Saxonne) et deux capots extérieurs 714a-b (également appelés OS pour « Outer Structure » en terminologie Anglo-Saxonne).

Chaque capot 712a-b, 714a-b prend globalement la forme d'un demi-cylindre et la nacelle 710 présente, de part et d'autre d'un plan milieu sensiblement vertical et passant par l'axe central du noyau 708, un capot intérieur 712a-b et un capot extérieur 714a-b associé.

En position fermée, les deux capots intérieurs 712a-b sont jointifs et forment globalement un cylindre qui entoure le noyau 708 et constitue la paroi interne de la veine secondaire et les deux capots extérieurs 714a-b sont jointifs et forment globalement un cylindre qui entoure les capots intérieurs 712a-b et constitue la paroi externe de la veine secondaire.

Chaque capot extérieur 714a-b est monté articulé sur le mât 704 par l'intermédiaire de charnières. Chaque capot intérieur 712a-b est fixé au capot extérieur 714a-b associé et la fixation est assurée par des éléments structurels inférieurs 716a-b et des éléments structurels supérieurs 718a-b. Ainsi, pour chaque capot extérieur 714a-b, le capot intérieur 712a-b associé est fixé au capot extérieur 714a-b en partie basse par un élément structurel inférieur 716a-b et en partie haute par un élément structurel supérieur 718a-b.

Si un tel arrangement est particulièrement intéressant lorsqu'aucun des capots n'est mobile pendant le fonctionnement du turboréacteur double flux 706, cet arrangement n'est pas adapté lorsque l'un des capots est mobile en fonctionnement, en particulier lorsqu'un capot est mobile dans le cadre d'un système inverseur de poussée Un turboréacteur selon l'art antérieur est divulgué dans les documents EP3103995 et US2013220435.

Un objet de la présente invention est de proposer un turboréacteur double flux qui comporte une nacelle équipée d'un système inverseur avec une pluralité de portes et un capot mobile qui est articulé pour permettre son ouverture lors des opérations de maintenance.

A cet effet, est proposé un turboréacteur double flux selon la revendication 1.

Un tel turboréacteur double flux peut ainsi facilement être ouvert pour les opérations de maintenance.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est une vue de côté d'un aéronef comportant un turboréacteur double flux selon l'invention,
la Fig. 2 est une vue en perspective d'un turboréacteur double flux selon l'invention lorsque le système inverseur de poussée n'est pas activé,
la Fig. 3 est une vue en perspective du turboréacteur double flux lorsque le système inverseur de poussée est activé,
la Fig. 4 est une vue en perspective d'un détail du turboréacteur double flux selon l'invention au niveau de la poutre 12 heures,
la Fig. 5 est une vue en perspective d'un détail du turboréacteur double flux selon l'invention au niveau de la poutre 6 heures,
la Fig. 6 est une coupe selon un plan radial d'un détail du turboréacteur double flux selon l'invention, et
la Fig. 7 est une vue de l'arrière d'un système de propulsion de l'état de la technique.

Dans la description qui suit, les termes relatifs à une position sont pris en référence au sens d'avancement d'un aéronef

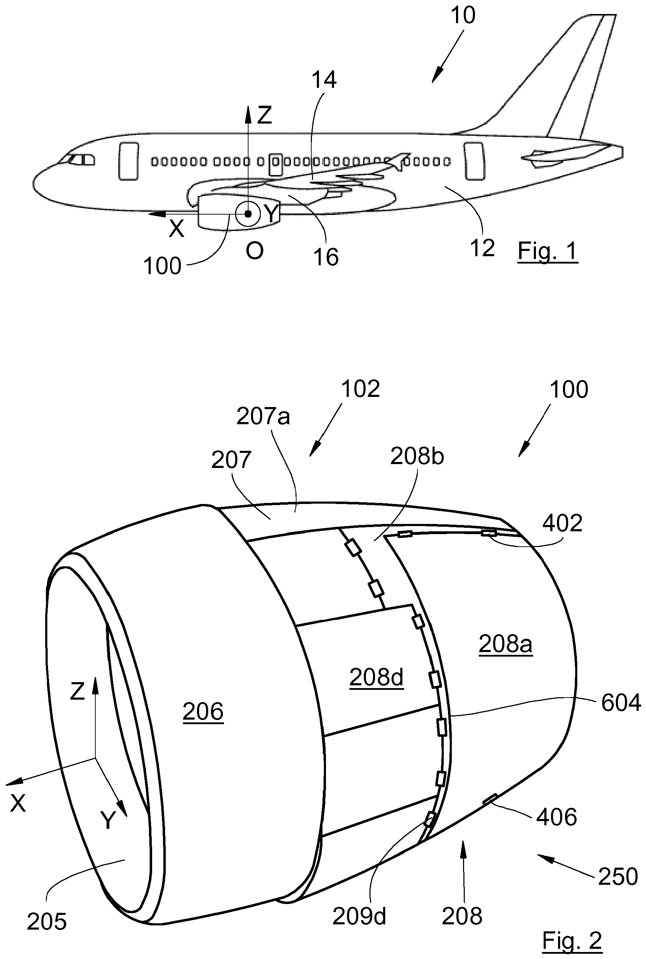

La Fig. 1 montre un aéronef 10 qui comporte un fuselage 12 de chaque côté duquel est fixée une aile 14 qui porte au moins un turboréacteur double flux 100 selon l'invention. La fixation du turboréacteur double flux 100 sous l'aile 14 s'effectue par l'intermédiaire d'un mât 16.

Dans la description qui suit, et par convention, on appelle X l'axe longitudinal du turboréacteur double flux 100 qui est parallèle à l'axe longitudinal de l'aéronef 10 et orienté positivement vers l'avant de l'aéronef 10, on appelle Y l'axe transversal qui est horizontal lorsque l'aéronef 10 est au sol, et Z l'axe vertical lorsque l'aéronef 10 est au sol, ces trois directions X, Y et Z étant orthogonales entre elles.

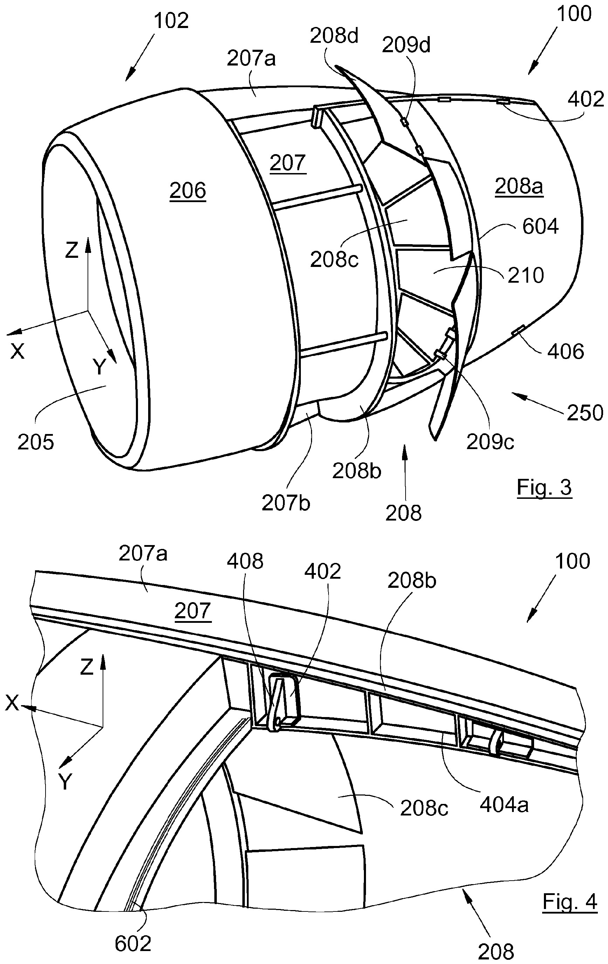

Les Figs. 2 et 3 montrent le turboréacteur double flux 100.

Le turboréacteur double flux 100 présente une nacelle 102, un moteur qui est logé à l'intérieur de la nacelle 102 sous forme d'un noyau et un carter de soufflante 206 en avant de la nacelle 102.

Comme pour la nacelle de l'état de la technique, la nacelle 102 présente deux capots intérieurs (également appelés IFS pour « Internai Fix Structure » en terminologie Anglo-Saxonne) et deux capots extérieurs (également appelés OS pour « Outer Structure » en terminologie Anglo-Saxonne).

Chaque capot intérieur est monté articulé sur le mât 16 par l'intermédiaire d'au moins une charnière et est mobile entre une position fermée dans laquelle le capot intérieur est resserré autour du moteur et une position ouverte dans laquelle le capot intérieur est écarté du moteur. L'axe de chaque charnière est globalement parallèle à l'axe longitudinal X.

En position fermée, les deux capots intérieurs sont jointifs et forment globalement un cylindre qui entoure le moteur et constitue la paroi interne d'une veine secondaire.

Le turboréacteur 100 comporte un système inverseur 250 qui est escamoté sur la Fig. 2 et déployé sur la Fig. 3.

Le turboréacteur double flux 100 présente entre la nacelle 102 et le moteur, la veine secondaire dans laquelle circule un flux secondaire provenant de l'entrée d'air 205 à travers une soufflante et qui s'écoule donc selon un sens d'écoulement qui va de l'avant vers l'arrière de l'aéronef 10.

La nacelle 102 présente une structure fixe 207 qui est montée fixe sur le carter de soufflante 206.

Le système inverseur 250 présente un ensemble mobile 208 qui comprend un capot mobile 208a formant les parois de la tuyère et un cadre 208b. Le cadre 208b prend ici la forme d'un cylindre à parois ajourées. Le capot mobile 208a est fixé au cadre 208b.

Il y a deux capots mobiles 208a disposés de part et d'autre d'un plan médian du turboréacteur double flux 100, chacun constituant un capot extérieur de la nacelle 102 comme décrit ci-dessus et ils forment globalement un cylindre qui entoure les capots intérieurs et, en position fermée, les deux capots mobiles 208a constituent la paroi externe de la veine secondaire.

L'ensemble mobile 208, par l'intermédiaire du cadre 208b, est monté mobile en translation selon une direction de translation globalement parallèle à l'axe longitudinal X sur la structure fixe 207 de la nacelle 102, et plus particulièrement ici sur la poutre 12 heures 207a et la poutre 6 heures 207b de la structure fixe 207.

La translation du cadre 208b, et donc de l'ensemble mobile 208, est réalisée par tous systèmes de glissières appropriés comme par exemple des glissières entre la structure fixe 207 et le cadre 208b. De la même manière, un premier système de transmission mécanique du système inverseur 250 est fixé à la structure fixe 207 pour déplacer le cadre 208b. Le premier système de transmission mécanique comprend par exemple des actionneurs tels que des vérins, des moteurs, des crémaillères.... Le premier système de transmission mécanique est commandé par une unité de contrôle de l'aéronef 10 et n'est pas décrit plus en détails, car il peut prendre différentes formes à la portée de l'homme du métier.

L'ensemble mobile 208 comporte également des portes d'inversion 208c-d qui sont montées articulées sur le cadre 208b et qui comprennent des portes intérieures 208c et des portes extérieures 208d.

Les portes 208c-d sont disposées à l'avant par rapport au capot mobile 208a.

Chaque porte intérieure 208c est montée articulée sur le cadre 208b entre une position stockée et une position déployée (Fig. 3) et inversement. Le passage de la position stockée à la position déployée s'effectue par une rotation de la porte intérieure 208c vers l'intérieur du turboréacteur 100.

Chaque porte intérieure 208c est articulée par un bord arrière au cadre 208b par des charnières 209c fixées au cadre 208b tandis que le bord libre opposé se positionne vers l'avant en position stockée et en travers de la veine secondaire et vers le moteur en position déployée.

Les portes extérieures 208d sont disposées à l'extérieur par rapport aux portes intérieures 208c. Chaque porte extérieure 208d est montée en regard d'une porte intérieure 208c et la porte extérieure 208d et la porte intérieure 208c en regard constituent un couple de portes. Le système inverseur 250 comporte ainsi une pluralité de couples de portes 208c-d.

Chaque porte extérieure 208d est montée articulée sur le cadre 208b entre une position stockée (Fig. 2) et une position déployée (Fig. 3) et inversement. Le passage de la position stockée à la position déployée s'effectue par une rotation de la porte extérieure 208d vers l'extérieur du turboréacteur 100. Lorsque les portes intérieures 208c et les portes extérieures 208d sont déployées, elles forment globalement une continuité qui permet de dévier le flux secondaire vers l'extérieur et l'avant de la nacelle 102.

Chaque porte extérieure 208d est articulée par un bord arrière au cadre 208b par des charnières 209d fixées au cadre 208b tandis que le bord libre opposé se positionne vers l'avant en position stockée et vers l'extérieur en position déployée.

En position stockée, les portes extérieures 208d sont disposées entre le capot mobile 208a et le carter de soufflante 206, de manière à constituer une paroi extérieure de la nacelle 102 qui est donc en contact avec le flux d'air qui s'écoule autour de la nacelle 102.

Le passage de chaque porte 208c-d de la position stockée à la position déployée et inversement est assuré par un deuxième système de transmission mécanique du système inverseur 250, comprenant par exemple un moteur, un vérin, un système à crémaillère, .... Le deuxième système de transmission mécanique est commandé par une unité de contrôle de l'aéronef 10 et n'est pas décrit plus en détails, car il peut prendre différentes formes à la portée de l'homme du métier.

L'ensemble mobile 208, et donc le cadre 208b, est mobile entre une position avancée (Fig. 2) et une position reculée (Fig. 3) et inversement. En position avancée, l'ensemble mobile 208, et donc le cadre 208b, est positionné le plus en avant possible de manière à ce que les portes extérieures 208d, qui sont en position stockée, soient rapprochées du carter de soufflante 206. En position reculée, l'ensemble mobile 208, et donc le cadre 208b, est positionné le plus en arrière possible de manière à ce que les portes extérieures 208d soient éloignées du carter de soufflante 206.

En position avancée, les portes extérieures 208d prolongent le carter de soufflante 206 vers l'arrière de manière à définir la surface extérieure de la veine secondaire et, de la même manière, le capot mobile 208a prolonge les portes extérieures 208d vers l'arrière de manière à définir la surface extérieure de la veine secondaire.

La position stockée des portes 208c-d peut être adoptée lorsque le cadre 208b est en position avancée ou en position reculée. La position déployée des portes 208c-d ne peut être adoptée que lorsque le cadre 208b est en position reculée.

Le passage de la position avancée du cadre 208b à la position reculée du cadre 208b et déployée des portes 208c-d consiste donc, à partir de la position avancée du cadre 208b et donc des positions stockées des portes 208c-d, à activer le premier système de transmission mécanique pour reculer le cadre 208b par translation par rapport à la structure fixe 207 pour atteindre la position reculée pour le cadre 208b et les positions stockées des portes 208c-d, puis à activer chaque deuxième système de transmission mécanique pour déplacer chaque porte 208c-d de la position stockée à la position déployée.

Le déplacement inverse permet de revenir à la position stockée et avancée.

En position reculée, le turboréacteur double flux 100 présente une fenêtre 210 ouverte entre la veine secondaire et l'extérieur de la nacelle 102 et qui est délimitée à l'avant par la structure fixe 207 et à l'arrière par le capot mobile 208a. En position stockée, les portes 208c-d obturent la fenêtre 210 et en position déployée, les portes 208c-d n'obturent pas la fenêtre 210 et la laissent libre, c'est-à-dire que l'air provenant du flux secondaire traverse la fenêtre 210 pour rejoindre l'extérieur du turboréacteur double flux 100.

Lorsque les portes 208c-d sont en position déployée, le flux secondaire est dévié vers l'extérieur de la nacelle 102 et vers l'avant permettant de produire une contre-poussée.

La poutre 12 heures 207a et la poutre 6 heures 207b s'étendent selon une direction globalement parallèle à l'axe longitudinal X.

Le cadre 208b prend la forme d'un demi-cylindre et se déplace en translation entre la poutre 12 heures 207a et la poutre 6 heures 207b. A cette fin, le cadre 208b comporte une poutre haute 404a qui se positionne contre la poutre 12 heures 207a et qui lui est parallèle, et une poutre basse 404b qui se positionne contre la poutre 6 heures 207b et qui lui est parallèle.

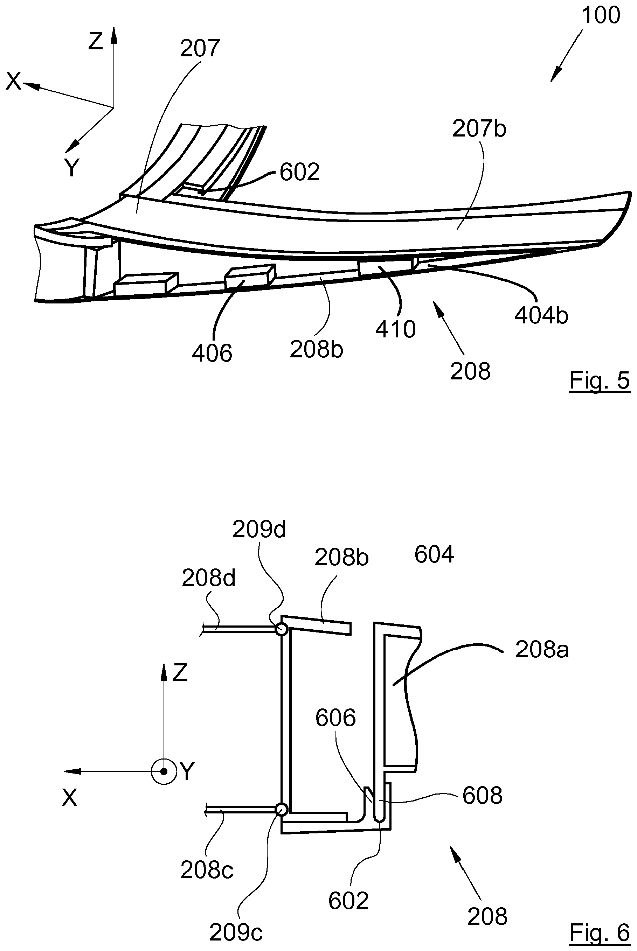

Les Figs. 4 et 5 montrent l'arrangement particulier du capot mobile 208a sur le cadre 208b.

Le capot mobile 208a est monté articulé sur le cadre 208b par l'intermédiaire d'au moins une charnière 402 dont l'axe de rotation est globalement parallèle à l'axe longitudinal X. Chaque charnière 402 est fixée entre la poutre haute 404a et une partie haute du capot mobile 208a.

Chaque charnière 402 prend ici la forme d'une chape solidaire du capot mobile 208a et recevant une plaque percée 408 solidaire du cadre 208b.

Ainsi, le capot mobile 208a se déplace en même temps que le cadre 208b lors du fonctionnement du turboréacteur double flux 100, en particulier en phase d'inversion de poussée, et il peut s'ouvrir vers le haut pour libérer l'espace nécessaire à la maintenance du turboréacteur double flux 100.

Pour verrouiller le capot mobile 208a en position fermée, le turboréacteur double flux 100 comporte au moins un verrou 406 fixé à la poutre basse 404b ou à une partie basse du capot mobile 208a et qui verrouille la partie basse du capot mobile 208a avec la poutre basse 404b.

Pour limiter les vibrations du capot mobile 208a en position fermée, des butées 410 sont fixées à la poutre basse 404b et, pour chaque butée 410, une contrebutée est fixée à la partie basse du capot mobile 208a, et en position fermée du capot mobile 208a, la contrebutée est en pression contre la butée 410 associée.

La Fig. 5 montre un détail de réalisation de l'invention.

Le cadre 208b présente une rainure 602 qui est ouverte vers l'extérieur du turboréacteur double flux 100 et qui s'étend sur un pourtour circulaire 606 du cadre 208b. Le pourtour circulaire 606 est la partie qui est en regard du bord avant 604 du capot mobile 208a en position fermée, c'est-à-dire celui qui est dans le prolongement des portes 108c-d.

Le capot mobile 208a présente au niveau de son bord avant 604, une nervure 608 qui s'étend le long du bord avant 604 et qui, en position fermée, se positionne dans la rainure 602.

L'interaction entre la nervure 608 et la rainure 602 assure, en position fermée, un bon positionnement du capot mobile 208a par rapport au cadre 208b.

## Revendications

1. Turboréacteur double flux (100) comportant un moteur, une nacelle (102) entourant le moteur et un carter de soufflante (206), où une veine secondaire d'un flux secondaire est délimitée entre la nacelle (102) et le moteur et dans laquelle un flux d'air circule selon un sens d'écoulement, ladite nacelle (102) comportant :
- une structure fixe (207) fixée au carter de soufflante (206),
- un système inverseur (250) présentant un cadre (208b), un capot mobile (208a) fixé au cadre (208b), des portes intérieures (208c) articulées par un bord arrière au cadre (208b) et des portes extérieures (208d) articulées par un bord arrière au cadre (208b), les portes (208c-d) étant disposées à l'avant par rapport au capot mobile (208a),
le cadre (208b) étant mobile en translation sur la structure fixe (207) selon une direction de translation entre une position avancée dans laquelle le cadre (208b) est positionné de manière à ce que les portes extérieures (208d) soient rapprochées du carter de soufflante (206) et une position reculée dans laquelle le cadre (208b) est positionné de manière à ce que les portes extérieures (208d) soient éloignées du carter de soufflante (206) pour définir une fenêtre (210) entre la structure fixe (207) et le capot mobile (208a) qui est ouverte entre la veine secondaire et l'extérieur de la nacelle (102),
chaque porte (208c-d) étant mobile entre une position stockée dans laquelle elle obture la fenêtre (210) et une position déployée dans laquelle elle n'obture pas la fenêtre (210),
le capot mobile (208a) est monté articulé sur le cadre (208b) par l'intermédiaire d'au moins une charnière (402) dont l'axe de rotation est globalement parallèle à un axe longitudinal X du turboréacteur double flux (100),
**caractérisé en ce que** la structure fixe (207) comporte une poutre 12 heures (207a), **en ce que** le cadre (208b) comporte une poutre haute (404a) qui se positionne contre la poutre 12 heures (207a), et **en ce que** chaque charnière (402) est fixée entre la poutre haute (404a) et une partie haute du capot mobile (208a).

2. Turboréacteur double flux (100) selon la revendication 1, **caractérisé en ce que** la structure fixe (207) comporte une poutre 6 heures (207b), **en ce que** le cadre (208b) comporte une poutre basse (404b) qui se positionne contre la poutre 6 heures (207b), et **en ce qu'**il comporte au moins un verrou (406) qui verrouille une partie basse du capot mobile (208a) avec la poutre basse (404b) en position fermée.

3. Turboréacteur double flux (100) selon la revendication 2, **caractérisé en ce que** la poutre basse (404b) présente des butées (410), et **en ce que** pour chaque butée (410), la partie basse du capot mobile (208a) comporte une contrebutée qui est en pression contre ladite butée (410) en position fermée.

4. Turboréacteur double flux (100) selon l'une des revendications précédentes, **caractérisé en ce que** le cadre (208b) présente une rainure (602) ouverte vers l'extérieur et s'étendant sur un pourtour circulaire (606) du cadre (208b) qui est en regard d'un bord avant (604) du capot mobile (208a), **en ce que** le bord avant (604) présente une nervure (608) qui s'étend le long dudit bord avant (604), et **en ce que**, en position fermée, la nervure (608) se positionne dans la rainure (602).

5. Aéronef (10) comportant au moins un turboréacteur double flux (100) selon l'une des revendications précédentes.

## Patentansprüche

1. Zweistrom-Turbostrahltriebwerk (100), das einen Motor, eine den Motor umgebende Gondel (102) und ein Gebläsegehäuse (206) aufweist, wobei ein Sekundärkanal eines Sekundärstroms zwischen der Gondel (102) und dem Motor begrenzt wird und in dem ein Luftstrom gemäß einer Strömungsrichtung fließt, wobei die Gondel (102) aufweist:
- eine am Gebläsegehäuse (206) befestigte ortsfeste Struktur (207),
- ein Schubumkehrsystem (250) mit einem Rahmen (208b), einer am Rahmen (208b) befestigten beweglichen Haube (208a), Innentüren (208c), die durch einen hinteren Rand am Rahmen (208b) angelenkt sind, und Außentüren (208d), die durch einen hinteren Rand am Rahmen (208b) angelenkt sind, wobei die Türen (208c-d) bezüglich der beweglichen Haube (208a) vorne angeordnet sind,
wobei der Rahmen (208b) auf der ortsfesten Struktur (207) gemäß einer Translationsrichtung zwischen einer vorgeschobenen Stellung, in der der Rahmen (208b) so positioniert ist, dass die Außentüren (208d) dem Gebläsegehäuse (206) angenähert sind, und einer zurückgeschobenen Stellung translationsbeweglich ist, in der der Rahmen (208b) so positioniert ist, dass die Außentüren (208d) vom Gebläsegehäuse (206) entfernt sind, um ein Fenster (210) zwischen der ortsfesten Struktur (207) und der beweglichen Haube (208a) zu definieren, das zwischen dem Sekundärkanal und der Außenumgebung der Gondel (102) geöffnet ist,
wobei jede Tür (208c-d) zwischen einer gelagerten Stellung, in der sie das Fenster (210) verdeckt, und einer ausgefahrenen Stellung beweglich ist, in der sie das Fenster (210) nicht verdeckt,
wobei die bewegliche Haube (208a) mittels mindestens eines Scharniers (402) gelenkig auf den Rahmen (208b) montiert ist, dessen Drehachse insgesamt parallel zu einer Längsachse X des Zweistrom-Turbostrahltriebwerks (100) ist,
**dadurch gekennzeichnet, dass** die ortsfeste Struktur (207) einen 12-Uhr-Träger (207a) aufweist, dass der Rahmen (208b) einen oberen Träger (404a) aufweist, der sich gegen den 12-Uhr-Träger (207a) positioniert, und dass jedes Scharnier (402) zwischen dem oberen Träger (404a) und einem oberen Teil der beweglichen Haube (208a) befestigt ist.

2. Zweistrom-Turbostrahltriebwerk (100) nach Anspruch 1, **dadurch gekennzeichnet, dass** die ortsfeste Struktur (207) einen 6-Uhr-Träger (207b) aufweist, dass der Rahmen (208b) einen unteren Träger (404b) aufweist, der sich gegen den 6-Uhr-Träger (207b) positioniert, und dass es mindestens einen Riegel (406) aufweist, der einen unteren Teil der beweglichen Haube (208a) mit dem unteren Träger (404b) in der geschlossenen Stellung verriegelt.

3. Zweistrom-Turbostrahltriebwerk (100) nach Anspruch 2, **dadurch gekennzeichnet, dass** der untere Träger (404b) Anschläge (410) aufweist, und dass der untere Teil der beweglichen Haube (208a) für jeden Anschlag (410) einen Gegenanschlag aufweist, der in der geschlossenen Stellung gegen den Anschlag (410) gepresst wird.

4. Zweistrom-Turbostrahltriebwerk (100) nach einem der vorhergehenden Ansprüche, **dadurch gekennzeichnet, dass** der Rahmen (208b) eine Rille (602) aufweist, die nach außen offen ist und sich auf einem kreisförmigen Umfang (606) des Rahmens (208b) erstreckt, der einem vorderen Rand (604) der beweglichen Haube (208a) gegenüberliegt, dass der vordere Rand (604) eine Rippe (608) aufweist, die sich entlang des vorderen Rands (604) erstreckt, und dass die Rippe (608) sich in der geschlossenen Stellung in der Rille (602) positioniert.

5. Luftfahrzeug (10), das mindestens ein Zweistrom-Turbostrahltriebwerk (100) nach einem der vorhergehenden Ansprüche aufweist.

## Claims

1. Two-flow turbine engine (100) comprising a motor, a nacelle (102) surrounding the motor and a fan casing (206), a secondary duct for a secondary flow being delimited between the nacelle (102) and the motor, and in which a flow of air flows in a flow direction, said nacelle (102) comprising:
- a fixed structure (207) that is fixed to the fan casing (206),
- a reverser system (250) having a frame (208b), a mobile cowl (208a) fixed to the frame (208b), inner doors (208c) that are articulated at a rear edge to the frame (208b) and outer doors (208d) that are articulated at a rear edge to the frame (208b), the doors (208c-d) being arranged forward of the mobile cowl (208a),
the frame (208b) being able to move in translation on the fixed structure (207) in a direction of translation between an advanced position in which the frame (208b) is positioned such that the outer doors (208d) are moved close to the fan casing (206) and a retracted position in which the frame (208b) is positioned such that the outer doors (208d) are moved away from the fan casing (206) so as to define a window (210), between the fixed structure (207) and the mobile cowl (208a), which is open between the secondary duct and the outside of the nacelle (102),
each door (208c-d) being able to move between a stowed position in which it closes the window (210) and a deployed position in which it does not close the window (210),
the mobile cowl (208a) is mounted in articulated fashion on the frame (208b) via the intermediary of at least one hinge (402) whose axis of rotation is generally parallel to a longitudinal axis X of the two-flow turbine engine (100),
**characterized in that** the fixed structure (207) comprises a 12 o'clock beam (207a), **in that** the frame (208b) comprises an upper beam (404a) which is positioned against the 12 o'clock beam (207a), and **in that** each hinge (402) is fixed between the upper beam (404a) and an upper part of the mobile cowl (208a).

2. Two-flow turbine engine (100) according to Claim 1, **characterized in that** the fixed structure (207) comprises a 6 o'clock beam (207b), and **in that** the frame (208b) comprises a lower beam (404) which is positioned against the 6 o'clock beam (207b), and **in that** it comprises at least one lock (406) which locks a lower part of the mobile cowl (208a) with the lower beam (404b) in the closed position.

3. Two-flow turbine engine (100) according to Claim 2, **characterized in that** the lower beam (404b) has stops (410), and **in that** for each stop (410) the lower part of the mobile cowl (208a) comprises a counter-stop that, in the closed position, presses against said stop (410).

4. Two-flow turbine engine (100) according to one of the preceding claims, **characterized in that** the frame (208b) has a groove (602) that is open towards the outside and extends over a circular perimeter (606) of the frame (208b) which faces a front edge (604) of the mobile cowl (208a), **in that** the front edge (604) has a tongue (608) that extends along said front edge (604), and **in that**, in the closed position, the tongue (608) is positioned in the groove (602).

5. Aircraft (10) comprising at least one two-flow turbine engine (100) according to one of the preceding claims.
